# EUROPEAN PATENT APPLICATION

(11) **EP 4 145 201 A1**
(43) Date of publication of application: **08.03.2023**
(21) Application number: 21942127.8
(22) Date of filing: 27.09.2021
(51) Int. Cl.: G02B 6/38

(54) **PREFABRICATED CONNECTOR, COUPLER AND PREFABRICATED CONNECTOR ASSEMBLY**

(30) Priority: 26.05.2021 CN 202110574680
(71) Applicant: Zhongtian Broadband Technology Co., Ltd., Nantong, Jiangsu 226400 (CN); Jiangsu Zhongtian Technology Co., Ltd., Nantong, Jiangsu 226000 (CN)
(72) Inventor: MIAO, Dongqing, Nantong, Jiangsu 661300 (CN); SUN, Jianhua, Nantong, Jiangsu 661300 (CN); PU, Wei, Nantong, Jiangsu 661300 (CN); WANG, Jianbing, Nantong, Jiangsu 661300 (CN); ZHAO, Yuli, Nantong, Jiangsu 661300 (CN); LIU, Yuexiang, Nantong, Jiangsu 661300 (CN); YAO, QiuFei, Nantong, Jiangsu 661300 (CN)
(74) Representative: Boult Wade Tennant LLP
(86) International application number: PCT/CN2021/120846
(87) International publication number: WO 2022/247081

(57) **Abstract**

A prefabricated connector, a coupler and a prefabricated connector assembly, the prefabricated connector includes a connector housing assembly and a ferrule assembly, where an outer wall of a first end of the connector housing assembly is provided with a connector clamping part (1201); the coupler includes a coupler body and a sleeve (23), where the coupler body is provided with a coupler metal snap (22) thereon. The connector clamping part (1201) is suitable for being rotated into the coupler metal snap (22) to connect the prefabricated connector with the coupler after the prefabricated connector and the coupler are inserted in place, so as to form the prefabricated connector assembly. The present disclosure solves the technical problem that the operation of connecting the prefabricated connector and the coupler in the prior art is troublesome and the connection is prone to breakage, and improves the reliability of the connection between the prefabricated connector and the coupler.

## Description

### TECHNICAL FIELD

The present disclosure relates to the technical field of optical fiber connection and, in particular, to a prefabricated connector, a coupler and a prefabricated connector assembly.

### BACKGROUND

With large-scale construction of FTTH, the network is deeply affecting our lives, and the deployment of optical fiber networks and the arrangement of optical cables are an extremely important part. At present, optical cable termination is mainly performed by pigtail welding and by assembling quick connector on site, which provides poor mechanical performance and poor environmental resistance, and causes dust and water ingress in the device and thus seriously affect the transmission performance of the line. Therefore, a connector, with convenient installation, good protection performance and excellent mechanical performance, is required for connection between optical fibers to meet the needs and habits of users at home and abroad. In the prior art, a prefabricated connector and a coupler are connected by a rotary snap structure, but the connection strength at the snap structure is low, which easily brings the problem of breakage.

### SUMMARY

The purpose of the present disclosure is to provide a prefabricated connector, a coupler and a prefabricated connector assembly that can be installed easily and fast and are reliable in connection, so as to alleviate the technical problem in the prior art that the connection strength between the prefabricated connector and the coupler is low, which is prone to break.

The present disclosure provides a prefabricated connector, which is suitable for connecting with a coupler, and the prefabricated connector includes:
a connector housing assembly, a first end of which is formed with a ferrule assembly mounting cavity, and a second end of which is formed with an optical cable lead-in cavity communicating with the ferrule assembly mounting cavity; and
a ferrule assembly, arranged inside the ferrule assembly mounting cavity and suitable for inserting and connecting of an optical fiber of an optical cable introduced from the optical cable lead-in cavity;
where a connector clamping part is arranged on an outer wall of the first end of the connector housing assembly and is suitable for being rotated into a coupler metal snap arranged on the coupler when the prefabricated connector and the coupler are inserted in place;
   or
a connector metal snap is arranged on the first end of the connector housing assembly and is suitable for a coupler clamping part on the coupler to be rotated into the connector metal snap when the prefabricated connector and the coupler are inserted in place.

The present disclosure provides a coupler, which is suitable for connecting with the prefabricated connector described above, including:
a coupler body, in which a sleeve mounting cavity is arranged; and
a sleeve, installed in the sleeve mounting cavity and suitable for inserting of a ferrule of the ferrule assembly when the coupler is connected with the prefabricated connector;
a coupler metal snap is arranged on the coupler body and is suitable for a connector clamping part on the prefabricated connector to be screwed into the coupler metal snap when the prefabricated connector and the coupler are inserted in place;
   or
a coupler clamping part is arranged on an outer wall of the coupler body and is suitable for being screwed into the connector metal snap on the prefabricated connector when the prefabricated connector and the coupler are inserted in place.

A prefabricated connector assembly provided by the present disclosure includes the above prefabricated connector and the above coupler.

The prefabricated connector and the coupler provided by the present disclosure are connected by a direct insertion rotary connection method with a clamping part and a metal snap, and the connection can be realized only by inserting the prefabricated connector and the coupler into place and then rotating them. In this way, the connection operation is smooth and accurate, and the operation becomes more convenient; moreover, because the snap is made of metal material different from the material of the coupler or the prefabricated connector, the connection strength of the connection part is enhanced, and the connection reliability of the prefabricated connector and the coupler is improved thereby.

### BRIEF DESCRIPTION OF DRAWINGS

In order to more clearly illustrate the technical solutions in specific embodiments of the present disclosure or in the prior art, the accompanying drawings required for describing the specific embodiments or of the prior art will be briefly introduced below. Obviously, the accompanying drawings in the following description show some embodiments of the present invention, and for those of ordinary skill in the art, other drawings may still be obtained based on these accompanying drawings without creative efforts.
FIG. 1 is an exploded view of a prefabricated connector provided by an embodiment of the present disclosure.
FIG. 2 is a sectional view of a prefabricated connector provided by an embodiment of the present disclosure.
FIG. 3 is an exploded view of a coupler provided by an embodiment of the present disclosure.
FIG. 4 is an assembly schematic diagram of a coupler provided by an embodiment of the present disclosure.
FIG. 5 is a sectional view of a coupler provided by an embodiment of the present disclosure.
FIG. 6 is a sectional view of a prefabricated connector assembly provided by an embodiment of the present disclosure from a first perspective.
FIG. 7 is a sectional view of a prefabricated connector assembly provided by an embodiment of the present disclosure from a second perspective.
FIG. 8 is a structural schematic diagram of a guide provided by an embodiment of the present disclosure.
FIG. 9 is a structural schematic diagram of a tail handle provided by an embodiment of the present disclosure.
FIG. 10 is a structural schematic diagram of an inner protective sleeve provided by an embodiment of the present disclosure.
FIG. 11 is a sectional view of an inner protective sleeve provided by an embodiment of the present disclosure.
FIG. 12 is a structural schematic diagram of a protective tail sleeve provided by an embodiment of the present disclosure.
FIG. 13 is a structural schematic diagram of an outer protective sleeve provided by an embodiment of the present disclosure.
FIG. 14 is a front view of a connector protective cap provided by an embodiment of the present disclosure.
FIG. 15 is a sectional view of an anti-bending tail sleeve provided by an embodiment of the present disclosure.
FIG. 16 is a structural diagram of a coupler outer end provided by an embodiment of the present disclosure from a first perspective.
FIG. 17 is a structural diagram of a coupler outer end provided by an embodiment of the present disclosure from a second perspective.
FIG. 18 is a sectional view of a coupler outer end provided by an embodiment of the present disclosure.
FIG. 19 is a structural diagram of a coupler inner end provided by an embodiment of the present disclosure from a first perspective.
FIG. 20 is a structural diagram of a coupler inner end provided by an embodiment of the present disclosure from a second perspective.
FIG. 21 is a sectional view of a coupler protective cap provided by an embodiment of the present disclosure.
FIG. 22 is a coupler metal snap provided by an embodiment of the present disclosure.
FIG. 23 is a structural diagram of a locking nut provided by an embodiment of the present disclosure.

Reference numerals: 1-guide; 101- guide key; 2-Guide inner housing; 3-ferrule; 4-elastic member; 5-tail handle; 501-curved boss; 502-opening slot; 6-crimp tube; 7-inner protective sleeve; 701-annular clamping table; 702-annular clamping part; 703-boss snap-in slot; 704-second abutting step; 705-fourth sealing slot; 706-connecting plate; 707-keyway; 708-baffle; 709-second sealing slot; 710-first mating surface; 8-inner-and-outer-sleeve sealing ring; 9-optical cable seal; 10-protective tail sleeve; 1001-third sealing slot; 1002-tail-sleeve sealing slot; 1003-boss; 1004-tail sleeve opening; 1005-annular rib; 1006-first abutting step; 11-tail sleeve seal; 12-outer protective sleeve; 1201-connector clamping part; 1202-first limiting protrusion; 1203-first ramp; 1204-protruding lines; 1205-annular boss; 13-anti-bending tail sleeve; 1301-annular insertion end; 1302-tail-sleeve annular rib; 1303-first-connector annular slot; 1304-anti-bending-tail-sleeve annular clamping slot; 14-optical cable; 15-connector dust cap; 16-connector protective cap; 1601- second-connector annular slot; 1602-first snap; 1603-perforated tail handle; 17-first protective cap sealing ring; 18-second protective cap sealing ring; 19-connector connecting piece; 20-coupler outer end; 2001-outer flange; 2002-positioning hole; 2003-annular skirt; 2004-avoiding notch; 2006-square positioning slot; 2007-annular positioning slot; 2008-sleeve mounting cavity; 2010-cylindrical tube opening; 2011-limiting bump; 2012-snap; 2014-outer guide slot; 21-coupler inner end; 2101-inner flange; 2102-square positioning protrusion; 2103-annular positioning protrusion; 2104-mounting slot; 2105-inner guide slot; 22-coupler metal snap; 2201-first plate; 2202-second plate; 2203-third plate; 23-sleeve; 24-locking nut; 2401-compression protrusion; 25- stop nut; 26-fourth protective cap sealing ring; 27-third protective cap sealing ring; 28-coupler protective cap; 2801-second clamping part; 2802-second ramp; 2803-second limiting protrusion; 2804-third-connector annular slot; 2805-coupler-protective-cap tail handle; 29-coupler dust cap; 30-coupler connecting piece.

### DETAILED DESCRIPTION OF EMBODIMENTS

The technical solution of the present disclosure will be described clearly and completely below in conjunction with embodiments. Obviously, the described embodiments are some but not all of the embodiments according to the present disclosure. All other embodiments obtained by those of ordinary skill in the art based on the embodiments of the present disclosure without creative work are within the protection scope of the present disclosure.

An optical cable 14 includes an optical fiber, a stiffener arranged around the optical fiber, and an optical cable sheath wrapped around the optical fiber and the stiffener.

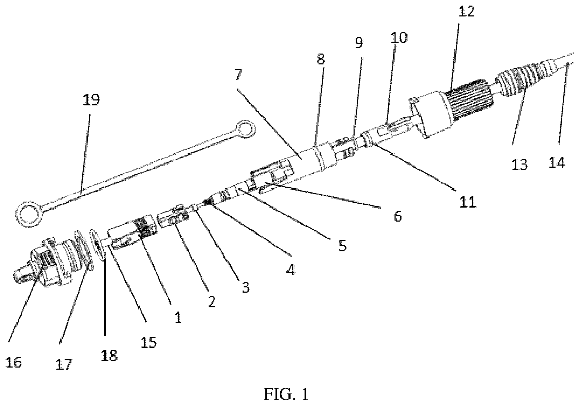

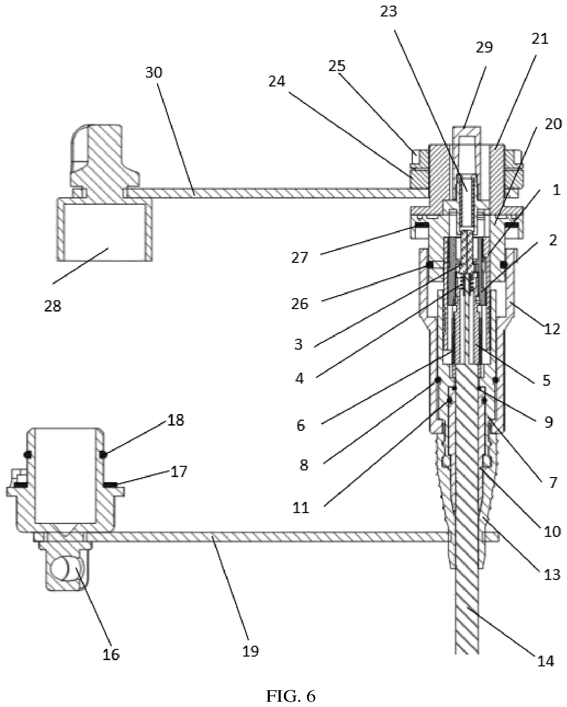

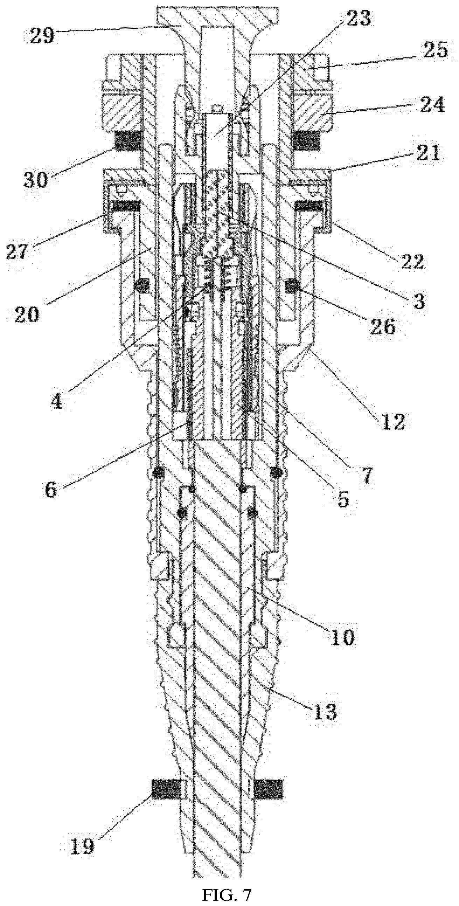

As shown in FIG. 1 and FIG. 2 and FIG. 6 to FIG. 15, a prefabricated connector provided by the embodiment is suitable for connecting with a coupler, and includes a connector housing assembly and a ferrule assembly, where a first end of the connector housing assembly is formed with a ferrule assembly mounting cavity, and a second end of the connector housing assembly is formed with an optical cable lead-in cavity communicating with the ferrule assembly mounting cavity; the ferrule assembly is arranged in the ferrule assembly mounting cavity and is suitable for inserting and connecting of the optical fiber of the optical cable 14 introduced from the optical cable lead-in cavity; and
a connector clamping part 1201 is arranged on an outer wall of the first end of the connector housing assembly, and is suitable for being rotated into a coupler metal snap 22 arranged on the coupler when the prefabricated connector and the coupler are inserted in place.

The prefabricated connector and the coupler are connected, easily and fast, through the snap and the clamping part, which only requires the clamping part to be rotated into the snap after the prefabricated connector and the coupler are inserted in place. Considering that, in the process of connection, a snap integrally formed with the coupler in a same material is prone to break upon greater force, the snap on the coupler is separately made of metal materials in order to improve the strength of the snap, which can increase the service life of the coupler and enhance the reliability of the connection between the prefabricated connector and the coupler.

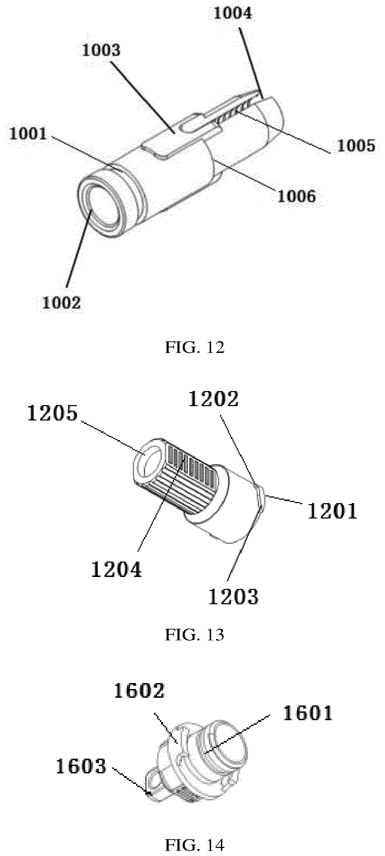

Further, the prefabricated connector further includes a connector protective cap 16 connected with the first end of the connector housing assembly, and the connector protective cap 16 forms a protective housing after being connected with the connector housing assembly, so that the ferrule assembly in the connector housing assembly can be protected. When the prefabricated connector needs to be connected with the coupler, only required is to remove the connector protective cap 16. As shown in FIG. 14, the connector protective cap 16 is provided with a first snap 1602 thereon, which is suitable for the connector clamping part 1201 to be rotated into the first snap 1602 when the connector housing assembly and the connector protective cap 16 are inserted in place.

Such a structural arrangement enables the connector clamping part 1201 of the connector housing assembly to be used for connecting with both the coupler and the connector protective cap 16, with a more streamlined structure.

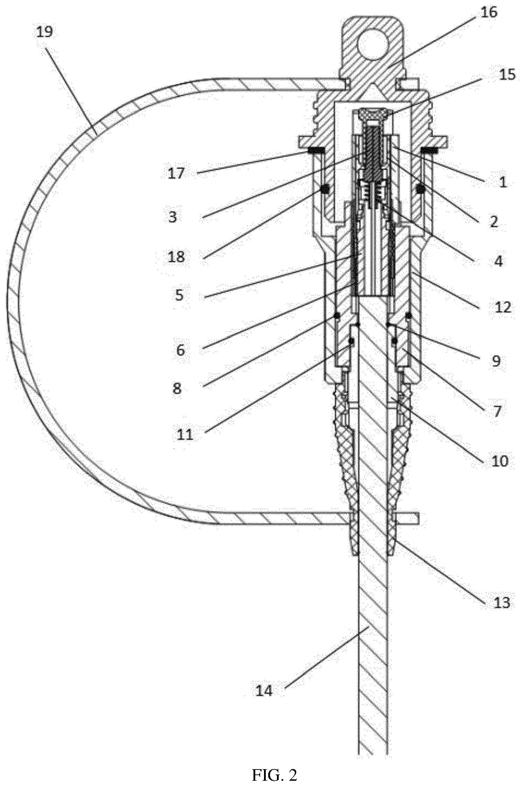

As shown in FIG. 2, a first protective cap sealing ring 17 is sleeved on the connector protective cap 16, and when the connector clamping part 1201 is screwed into and connected with the first snap 1602, the first end of the connector housing assembly cooperates with the connector protective cap 16 to compress the first protective cap sealing ring 17. With the arrangement of the first protective cap sealing ring 17, when the connector housing assembly and the connector protective cap 16 are screwed and connected, the first protective cap sealing ring 17 can be compressed, thereby forming an axial force between the connector housing assembly and the connector protective cap 16 to ensure reliable sealing performance.

Further, a second protective cap sealing ring 18 is provided between an outer wall of the connector protective cap 16 and an inner wall of the first end of the connector housing assembly. The arrangement of the second protective cap sealing ring 18 can form a second seal between the connector housing assembly and the connector protective cap 16, further improving the reliability of sealing between the connector housing assembly and the connector protective cap 16.

Specifically, as shown in FIG. 14, the connector protective cap 16 includes a protective cap body and a round edge arranged around an outer wall of the protective cap body, and the first snap 1602 is arranged on the round edge. Two first snaps 1602 are symmetrically arranged on the round edge, and of course, three or four first snaps 1602 can also be arranged. The round edge is set to cooperate with the end of the first end of the connector housing assembly to compress the first protective cap sealing ring 17.

As shown in FIG. 13, the connector clamping part 1201 is a first clamping boss arranged on the outer wall of the first end of the connector housing assembly along a circumferential direction, and a first ramp 1203 is formed on a first end of the first clamping boss, which forms a screw-in end for being screwed into the coupler metal snap 22 or the first snap 1602. The arrangement of the first ramp 1203 can facilitate the connector clamping part 1201 being smoothly screwed into the coupler metal snap 22 or the first snap 1602.

A second end of the first clamping boss is formed with a first limiting protrusion 1202, and the first limiting protrusion 1202 is used for abutting against the coupler metal snap 22 or the first snap 1602 when the first clamping boss is screwed in place.

The connector housing assembly includes:
a connector inner housing assembly, having the ferrule assembly mounting cavity and the optical cable lead-in cavity formed therein; and
a connector outer housing assembly, arranged outside the connector inner housing assembly, where the connector clamping part 1201 or the connector metal snap is arranged on a first end of the connector outer housing assembly.

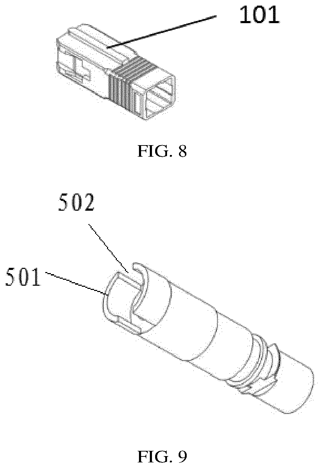

As shown in FIG. 1 and FIG. 2, the ferrule assembly includes a ferrule 3, a guide assembly, a tail handle 5, an elastic member 4, and a crimp tube 6, where a ferrule mounting cavity for mounting the ferrule 3 is formed on the guide assembly; the tail handle 5 has a cavity, a first end of the tail handle 5 is suitable for being connected with the guide assembly, and a side wall of a second end of the tail handle 5 is formed with an opening slot 502 communicating with the cavity; the elastic member 4 is arranged between the ferrule 3 and the tail handle 5, the elastic force thereof is used to abut against the ferrule 3, and the elastic member 4 is preferably a spring; the crimp tube 6 is sleeved outside the tail handle 5, as shown in FIG. 9, the stiffener of the optical cable is suitable to pass through the opening slot 502 into a position between the crimp tube 6 and the tail handle 5, and the stiffener is crimped between the crimp tube 6 and the tail handle 5 under the action of crimping force. Two opening slots 502 are symmetrically arranged on the tail handle 5, and they are formed by being separated by two curved bosses 501.

The crimp tube 6 is preferably a crimp aluminum tube, and preferably threads are formed on an inner wall of the crimp aluminum tube. When two stiffeners of the optical cable respectively pass through two opening slots 502 of the tail handle 5 into a position between the crimp tube 6 and the tail handle 5 to be crimped, the arrangement of the threads can enhance the friction after crimping and enhance the tensile strength.

Specifically, as shown in FIG. 1 and FIG. 2, the guide assembly includes a guide 1 and a guide inner housing 2, where the ferrule mounting cavity is formed on the guide inner housing 2, and the guide inner housing 2 is connected in the guide 1.

Further, the prefabricated connector also includes a connector dust cap 15 which is inserted on the ferrule assembly to prevent the ferrule 3 from dust.

The connector housing assembly includes the connector inner housing assembly and the connector outer housing assembly, where the ferrule assembly mounting cavity and the optical cable lead-in cavity are formed in the connector inner housing assembly; the connector housing assembly is arranged outside the connector inner housing assembly, and the connector clamping part 1201 is arranged on an inner wall of the first end of the connector outer housing assembly, and is arranged on the outer protective sleeve 12 in specific implementation.

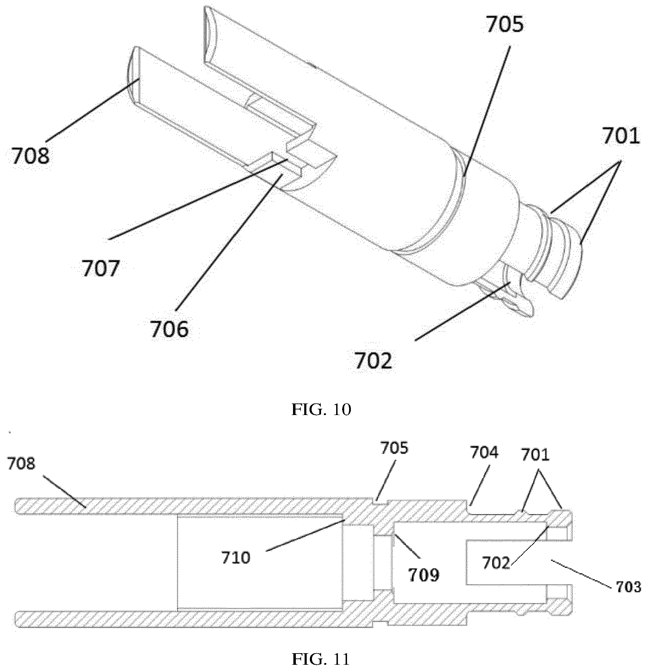

Further, as shown in FIG. 10 to FIG. 12, the connector inner housing assembly includes an inner protective sleeve 7 and a protective tail sleeve 10, a first end of the inner protective sleeve 7 is provided with the ferrule assembly mounting cavity in which the ferrule assembly is installed, and the first end of the inner protective sleeve 7 includes two oppositely arranged baffles 708 which are suitable to be inserted into two positioning holes 2002 of the coupler when the prefabricated connector is connected with the coupler; the protective tail sleeve 10 has an empty cavity suitable for the optical cable 14 to pass through, a first end of the protective tail sleeve 10 is connected to a second end of the inner protective sleeve 7, and seals are arranged between the inner protective sleeve 7 and the protective tail sleeve 10.

With the arrangement of the baffles 708 on the inner protective sleeve 7, during the connection with the coupler, the baffles 708 can be inserted into the positioning holes 2002 of the coupler, thereby enhancing the stability of the connection between the prefabricated connector and the coupler.

As shown in FIG. 11, a bottom of the ferrule assembly mounting cavity is a first mating surface 710, which is suitable for abutting against the curved boss 501 on the tail handle 5 to limit and fix the tail handle 5; as shown in FIG. 8, the guide 1 is provided with a guide key 101 thereon, and as shown in FIG. 10, a connecting plate 706 is provided between two baffles 708, and a keyway 707 suitable for inserting of the guide key 101 is formed on the connecting plate 706. The matching arrangement of the guide key 101 and the keyway 707 can realize the connection and positioning of the ferrule assembly and the inner protective sleeve 7, and play a role of preventing rotation.

A second sealing slot 709 is formed at a bottom of an insertion cavity, into which the protective tail sleeve 10 is inserted, of the second end of the inner protective sleeve 7, and a tail-sleeve sealing slot 1002 is formed at a port of the first end of the protective tail sleeve 10; a third sealing slot 1001 is arranged on an outer wall of the first end of the protective tail sleeve 10, and the seals include an optical cable seal 9 arranged in a sealing cavity enclosed by the second sealing slot 709 and the tail-sleeve sealing slot 1002, and a tail sleeve seal 11 arranged between the third sealing slot 1001 and an inner wall of the inner protective sleeve 7; the arrangement of double seals can effectively prevent water and dust from entering the ferrule assembly mounting cavity.

An annular clamping part 702 is formed on an inner wall of a port of the second end of the inner protective sleeve 7, and a first abutting step 1006 is formed on a side wall of the first end of the protective tail sleeve 10. The first end of the protective tail sleeve 10 is inserted into the inner protective sleeve and then abuts against the annular clamping part 702 through the first abutting step 1006 to clamp with the inner protective sleeve 7. Clamping fixation is more convenient and faster than screw fixation and heat shrinkage.

Further, as shown in FIG. 11 and FIG. 12, a boss snap-in slot 703 is formed at the second end of the inner protective sleeve 7, a boss 1003 is formed on the protective tail sleeve 10, and when the first end of the protective tail sleeve 10 is inserted into the second end of the inner protective sleeve 7, the boss 1003 is suitable for clipping into the boss snap-in slot 703. The coupling between the boss snap-in slot 703 and the boss 1003 can position the inner protective sleeve 7 and the protective tail sleeve 10 to prevent rotation, thus ensuring accurate positioning of the prefabricated connector.

Two tail sleeve openings 1004 are oppositely arranged on a second end of the protective tail sleeve 10, and an annular rib 1005 is also arranged on an inner wall of the second end of the protective tail sleeve 10. When the optical cable is introduced from the second end of the protective tail sleeve 10, the second end provided with the tail sleeve openings 1004 can tightly clamp the optical cable, and the annular rib 1005 can enhance the fixing force with the optical cable.

As shown in FIG. 2, the connector housing assembly includes the outer protective sleeve 12 and an anti-bending tail sleeve 13, and the connector clamping part 1201 is arranged on a first end of the outer protective sleeve 12.

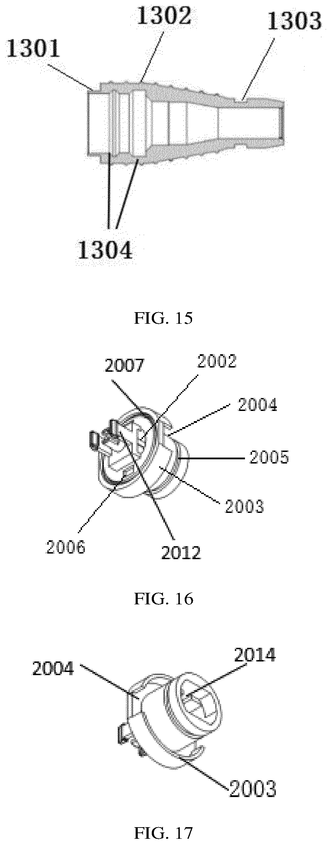

As shown in FIG. 13, an annular boss 1205 is formed on an inner wall of a second end of the outer protective sleeve 12; as shown in FIG. 15, an annular insertion end 1301 is formed on a first end of the anti-bending tail sleeve 13, and the annular insertion end 1301 is suitable for being inserted into the annular boss 1205. As shown in FIG. 11, an annular clamping table 701 and a second abutting step 704 are sequentially formed on an outer wall of the second end of the inner protective sleeve 7. As shown in FIG. 15, an anti-bending-tail-sleeve annular clamping slot 1304 is arranged on an inner wall of the first end of the anti-bending tail sleeve 13, the inner protective sleeve 7 is installed in the outer protective sleeve 12, and the second end of the inner protective sleeve 7 is suitable to pass through the second end of the outer protective sleeve 12 into the anti-bending tail sleeve 13 and abut against the annular boss 1205 through the second abutting step 704, and the annular clamping table 701 is clamped into the anti-bending-tail-sleeve annular clamping slot 1304, so as to connect with the anti-bending tail sleeve 13. The second end of the protective tail sleeve 10 is suitable for being inserted into the anti-bending tail sleeve 13. Protruding lines 1204 are provided on an outer side wall of the outer protective sleeve 12, which increases the hand feeling during operation.

Further, a sealing structure is arranged between an outer wall of the inner protective sleeve 7 and an inner wall of the outer protective sleeve 12. The sealing structure preferably includes a fourth sealing slot 705 arranged on the inner protective sleeve 7 and an inner-and-outer-sleeve sealing ring 8 arranged in the fourth sealing slot 705.

A first-connector annular slot 1303 is formed on an outer wall of a second end of the anti-bending tail sleeve 13, and a second-connector annular slot 1601 is formed on an outer wall of a second end of the connector protective cap 16. A first end of a connector connecting piece 19 is arranged inside the first-connector annular slot 1303, and a second end of the connector connecting piece 19 is arranged inside the second-connector annular slot 1601, so as to connect the connector protective cap 16 and the anti-bending tail sleeve 13. A perforated tail handle 1603 is provided on the connector protective cap 16; and a tail-sleeve annular rib 1302 is arranged on an outer wall of the anti-bending tail sleeve 13.

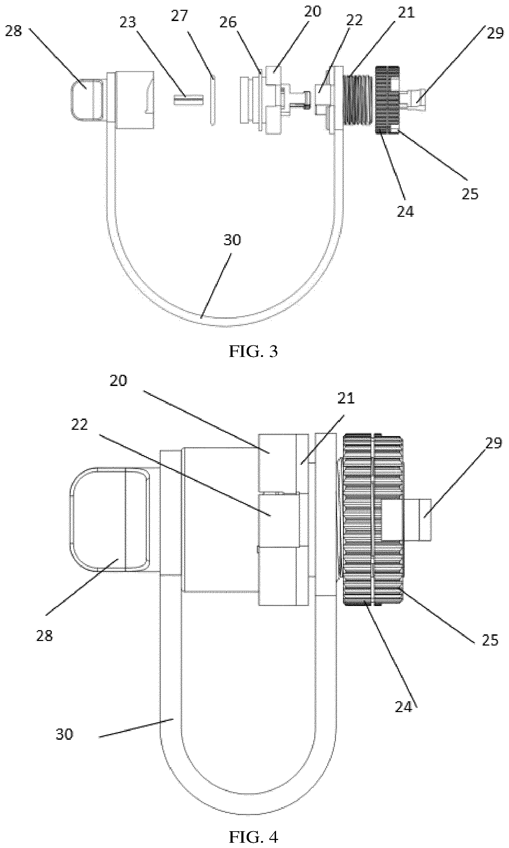

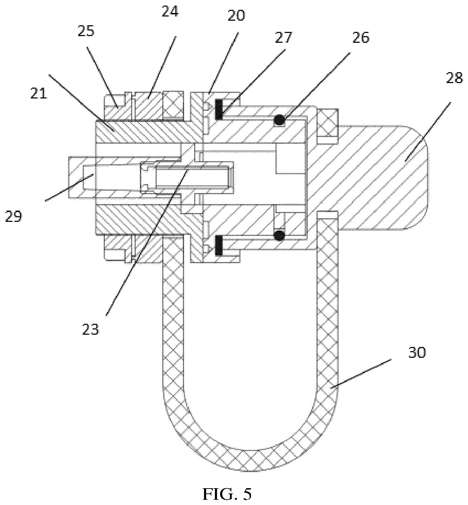

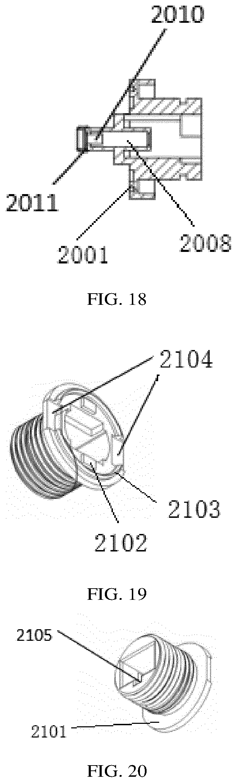

As shown in FIG. 3 to FIG. 5 and FIG. 16 to FIG. 23, a coupler of the embodiment is suitable for connecting with the prefabricated connector described above, includes:
a coupler body, having a sleeve mounting cavity 2008 arranged therein; and
a sleeve 23, installed inside the sleeve mounting cavity 2008, which is suitable for inserting of the ferrule 3 of the ferrule assembly when the coupler is connected with the prefabricated connector;
the coupler metal snap 22 is arranged on the coupler body and is suitable for the connector clamping part 1201 on the prefabricated connector to be screwed into the coupler metal snap 22 when the prefabricated connector and the coupler are inserted in place.

The prefabricated connector and the coupler are connected, easily and fast, through the snap and the clamping part, which only requires the clamping part to be rotated into the snap after the prefabricated connector and the coupler are inserted in place. Considering that, in the process of connection, a snap integrally formed with the coupler in a same material is prone to break upon greater force, the snap on the coupler is separately made of metal materials in order to improve the strength of the snap, which can increase the service life of the coupler and enhance the reliability of the connection between the prefabricated connector and the coupler.

The coupler further includes a coupler protective cap 28 connected with the coupler body, and a protective housing can be formed after the coupler protective cap 28 is connected with the coupler body. When the coupler needs to be connected with the prefabricated connector, only required is to remove the coupler protective cap 28. A second clamping part 2801 is arranged on the coupler protective cap 28, and is suitable for being screwed into the coupler metal snap 22 when the coupler body and the coupler protective cap 28 are inserted in place.

Such a structural arrangement enables the coupler metal snap 22 on the coupler to be used for connecting with both the coupler protective cap 28 and the connector clamping part 1201 on the prefabricated connector, with a more streamlined structure.

A third protective cap sealing ring 27 is sleeved on the coupler body. When the connector clamping part 1201 or the second clamping part 2801 is screwed into and connected with the coupler metal snap 22, the first end of the connector housing assembly or an end of the coupler protective cap 28 cooperates with the coupler body to compress the third protective cap sealing ring 27. With the arrangement of the third protective cap sealing ring 27, when the coupler body is screwed into and connected with the connector housing assembly or the coupler protective cap 28, the third protective cap sealing ring 27 can be compressed, thereby forming an axial force between the coupler body and the connector housing assembly or the coupler protective cap 28 to ensure reliable sealing performance.

A fourth protective cap sealing ring 26 is arranged between an inner wall of the coupler protective cap 28 and the outer wall of the coupler body. The arrangement of the fourth protective cap sealing ring 26 can form a second seal between the coupler body and the connector housing assembly or the coupler protective cap 28, thus further improving the reliability of sealing between the coupler body and the connector housing assembly or the coupler protective cap 28.

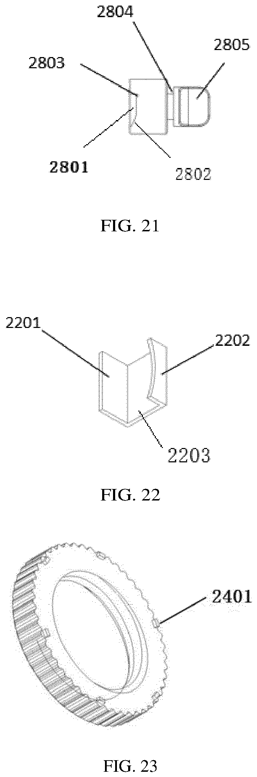

As shown in FIG. 22, the coupler metal snap 22 includes: a first plate 2201 and a second plate 2202 which are oppositely arranged, and a third plate 2203 which connects the first plate 2201 and the second plate 2202 to form a snap slot. The first plate 2201 is connected to the coupler body, and an end face of an end of the second plate 2202 which is not connected with the first plate 2201 is formed into a curved surface, which is suitable for cooperating with a curved outer wall of the connector housing assembly or of the coupler protective cap 28.

The coupler body includes a coupler outer end 20, a coupler inner end 21 and a locking nut 24, where the coupler outer end 20 includes a coupler outer body with an outer-end cavity, and a sleeve mounting cavity 2008 arranged at a first end of the coupler outer body, where the coupler outer body is suitable for connecting with a prefabricated connector or the coupler protective cap 28, and one end of the sleeve mounting cavity 2008 extends into the outer-end cavity, and the other end extends outside the outer-end cavity;
an inner-end cavity is provided on the coupler inner end 21; the inner-end cavity is suitable for the sleeve mounting cavity 2008 to be inserted into the inner-end cavity when a first end of the coupler inner end 21 is connected with a first end of the coupler outer end 20, and a second end of the coupler inner end 21 is an external thread end;
the locking nut 24 is connected, in a thread form, to the second end of the coupler inner end 21; and
a mounting slot 2104 is arranged between connected surfaces of the coupler outer end 20 or the coupler inner end 21, the first plate 2201 is arranged inside the mounting slot 2104, and fixed by connecting of the coupler inner end 21 and the coupler outer end 20. The coupler outer end 20 and the coupler inner end 21 are connected by welding, such as ultrasonic welding.

Specifically, as shown in FIG. 16 to FIG. 20, the first end of the coupler outer body is provided with an outer flange 2001, on which the sleeve mounting cavity 2008 is fixedly arranged;
an inner flange 2101 is arranged on the first end of the coupler inner end 21, and the coupler inner end 21 is integrally connected with the coupler outer end 20 by connecting of the outer flange 2001 and the inner flange 2101; and
the mounting slot 2104 is arranged on a connection surface of the inner flange 2101, and an annular skirt 2003 is arranged on a side of the outer flange 2001 facing away from the coupler inner end 21. An avoiding notch 2004 is arranged at a position of the annular skirt 2003 corresponding to the coupler metal snap 22.

After the inner flange 2101 and the outer flange 2001 are welded, the third plate 2203 of the coupler metal snap 22 is closely attached to the avoiding notch 2004 and forms a circle of retaining edge with the annular skirt 2003; upon such a structure, the third protective cap sealing ring 27 can be protected.

The second clamping part 2801 is a second clamping boss which is arranged on the outer wall of the coupler protective cap 28 along a circumferential direction, and a second ramp 2802 is formed on a first end of the second clamping boss, thus forming a screw-in end which is screwed into the coupler metal snap 22 or the second snap. The arrangement of the second ramp 2802 facilitates the second clamping part 2801 being successfully screwed into the coupler metal snap 22.

A second limiting protrusion 2803 is formed at a second end of the second clamping boss and is used for abutting against the coupler metal snap 22 or the second snap after the second clamping boss is screwed in place.

In order to prevent the locking nut 24 from loosening, a stop nut 25 arranged on the second end of the coupler inner end 21 is further included. As shown in FIG. 23, a compression protrusion 2401 is arranged on a side, facing the stop nut 25, of the locking nut 24. There are several compression protrusions 2401 which are uniformly provided, and for example, four compression protrusions 2401 are provided. The locking nut 24 is first used to fix the coupler on the device, and then the stop nut 25 is tightened; during the tightening, the compression protrusion 2401 is compressed to be deformed. A pre-tightening force is formed between the locking nut 24 and the stop nut 25, which can effectively prevent the fixation from loosening and ensure the stability of the fixation.

As shown in FIG. 21, the outer wall of the coupler protective cap 28 is also provided with a third-connector annular slot 2804 thereon, a first end of a coupler connecting piece 30 is arranged in the third-connector annular slot 2804, a second end of the coupler connecting piece 30 is arranged between the inner flange 2101 and the locking nut 24, the coupler connecting piece 30 can connect the coupler protective cap 28 with the coupler body, and the second end of the coupler connecting piece 30 can also form a primary seal. The coupler protective cap 28 is provided with a coupler-protective-cap tail handle 2805.

Further, as shown in FIG. 16 to FIG. 20, two positioning holes 2002 are arranged, on the outer flange 2001, around the sleeve mounting cavity 2008, and they are suitable for inserting of the baffles 708 on the inner protective sleeve 7 of the prefabricated connector; and
the outer flange 2001 and the inner flange 2101 are both waist-shaped flanges. Preferably, the two positioning holes 2002 are semicircular holes and symmetrically arranged relative to a center of the outer flange 2001.

The outer flange 2001 and the inner flange 2101 are connected by welding, and a positioning structure is arranged on a contact surface between the two flanges, which can not only position the two flanges during welding, but also enhance their connection strength. There can be many kinds of positioning structure when it is implemented, and in this embodiment, it is preferable to include an annular positioning slot 2007 and a square positioning slot 2006 which are formed on a surface of the outer flange 2001, and include an annular positioning protrusion 2103 and a square positioning protrusion 2102 which formed on a surface of the inner flange 2101. The annular positioning protrusion 2103 is inserted into the annular positioning slot 2007 and the square positioning protrusion 2102 is inserted into the square positioning slot 2006, so that the outer flange 2001 and the inner flange 2101 can be positioned. Of course, as an alternative implementation, the annular positioning slot 2007 and the square positioning slot 2006 may be arranged on the inner flange 2101, and the annular positioning protrusion 2103 and the square positioning protrusion 2102 may be arranged on the outer flange 2001. In specific arrangement, there are two square positioning slots 2006, which are arranged oppositely around the center of the outer flange 2001 and located inside the annular positioning slot 2007. A center of the annular positioning slot 2007 is concentric with the center of the outer flange 2001. The annular positioning protrusion 2103 and the square positioning protrusion 2102 are also arranged corresponding to the annular positioning slot 2007 and the square positioning slot 2006, which will not be repeated.

An end face of a first end of the outer flange 2001 is provided with a fixing seat, and a hollow cylindrical tube is fixed on the outer flange 2001 through the fixing seat, with its first end inside the outer flange 2001 and its second end outside the outer flange 2001. An inner cavity of the cylindrical tube forms the sleeve mounting cavity 2008, the second end of the cylindrical tube is provided with a cylindrical tube opening 2010, and two cylindrical tube openings 2010 are arranged oppositely. An inner wall of the second end of the cylindrical tube is further provided with a limiting bump 2011, which can prevent the sleeve 23 from coming out of the second end of the cylindrical tube after being inserted. Two snaps 2012 are oppositely arranged on the fixing seat, and the two snaps 2012 are arranged around the cylindrical tube and used for clamping with the coupler dust cap 29.

An inner cavity of a second end of the coupler outer body is suitable for inserting of the ferrule assembly, an inner cavity of the coupler outer body is formed with an outer guide slot 2014, and an inner cavity of coupler inner end 21 is also formed with an inner guide slot 2105. After the coupler inner end 21 and the coupler outer end 20 are welded, the outer guide slot 2014 is aligned with the inner guide slot 2105 and is suitable for inserting of the guide key 101 of the guide 1, so as to guide the insertion of the coupler and prefabricated connector. In addition, a port of the inner cavity of the coupler outer body is also formed with an outer step which is suitable for abutting against the inner protective sleeve 7.

A prefabricated connector assembly of the embodiment includes the prefabricated connector and the coupler described above.

Compared with the prefabricated connector, the coupler and the prefabricated connector assembly described above, as an alternative implementation, the metal snap can also be arranged on the prefabricated connector and the clamping part can be arranged on the coupler, specifically:
for the prefabricated connector, the first end of the connector housing assembly is provided with a connector metal snap, which is suitable for the coupler clamping part on the coupler to be rotated into the connector metal snap when the prefabricated connector and the coupler are inserted in place.

The connector protective cap 16 is provided with a first clamping part, which is suitable for being rotated into the connector metal snap when the connector housing assembly and the connector protective cap 16 are inserted in place.

For the coupler, a coupler clamping part is arranged on the outer wall of the coupler body, and is suitable for being screwed into the connector metal snap on the prefabricated connector when the prefabricated connector and the coupler are inserted in place.

The coupler protective cap 28 is provided with a second snap, which is suitable for screwing of the coupler clamping part into the second snap when the coupler body and the coupler protective cap 28 are inserted in place.

### Operating principle:

Punching is performed, according to a size of the coupler, on a device matched with the assembly, and an anti-rotation device is set thereon. The coupler is equipped with the coupler connecting piece 30, which penetrates through an opening of the device, and is fixed with the locking nut 24 and the stop nut 25. The connector inside the device is connected with the coupler, and the guide key 101 on the guide 1 of the prefabricated connector is aligned with a keyway mark on the coupler and connected with the coupler. The inner protective sleeve 7 has a first mating surface to ensure that the ferrule assembly is in a proper position in the connector housing assembly, and is fixed with screwing of the coupler and the outer protective sleeve 12. The third protective cap sealing ring 27 is compressed during the screwing, so that an axial force is formed between the coupler and the outer protective sleeve 12 to ensure the reliability of connection and sealing.

### Routing:

Processing technology of the coupler: the outer flange 2001 of the coupler and the inner flange 2101 of the coupler are ultrasonically welded; during welding, the first plate 2201 of the coupler metal snap 22 is put into the mounting slot 2104 on the coupler inner end 21 and fixed on the coupler; attention should be paid when welding that the inner guide slot 2105 and the outer guide slot 2014 of the coupler must be in a line, the square positioning protrusion 2102 and the annular positioning protrusion 2103 on the coupler inner end 21 are matched with the square positioning slot 2006 and the annular positioning slot 2007 on the coupler outer end 20, respectively, which increases the welding strength; the sleeve 23 (preferably a ceramic sleeve) is pressed into from an end of the sleeve mounting cavity 2008 on the coupler outer end 20 with a crimping tool; the coupler protective cap 28, the coupler dust cap 29, the coupler connecting piece 30, the locking nut 24 and the stop nut 25 are installed to complete the coupler manufacturing.

Processing technology of the prefabricated connector: the connector connecting piece 19, the anti-bending tail sleeve 13, the protective tail sleeve 10, the tail sleeve seal 11, the optical cable seal 9, the outer protective sleeve 12 and the inner protective sleeve 7 are inserted into the optical cable 14, the tail sleeve seal 11 is moved into the third sealing slot 1001 of the protective tail sleeve 10, and the inner-and-outer-sleeve sealing ring 8 is inserted into the fourth sealing slot 705 of the inner protective sleeve 7; and then an outer sleeve of the optical cable 14 is peeled off, leaving an optical cable unit and the stiffener in the optical cable 14, and the crimp tube 6, the tail handle 5 and the elastic member 4 are inserted into the optical cable unit in the optical cable 14.

Then the optical cable unit is peeled off according to the process template. During stripping, a reserved length of a tight-wrap layer (outer sleeve of the optical cable) of the optical cable unit is 20mm, a reserved length of aramid fiber (the stiffener) is about 12mm, and a reserved length of the optical fiber is about 15 mm. By controlling the length, it is ensured that the ferrule assembly is in a natural state in the inner protective sleeve 7 during working, without causing additional loss, thus ensuring the optical performance of the prefabricated connector; and then glue is injected into the ferrule 3; next, the optical fiber is inserted into the ferrule 3, and then heated and solidified; the ferrule 3 is installed inside the guide inner housing 2, the tail handle 5 is then pushed into the guide inner housing 2, and the tail handle 5 and the guide inner housing 2 are fixed by clamping; the aramid fiber penetrates, from the opening slot 502 on the tail handle 5, into between the tail handle 5 and the crimp tube 6, and is crimped by a crimping machine, so that the optical cable and the ferrule assembly are fixed to ensure that the connector bears various external forces; grinding, testing and other processes are then carried out to complete the production of the connector;
the inner protective sleeve 7 is then pushed forward, the ferrule assembly is installed into the inner cavity of the inner protective sleeve 7, and note that the keyway 707 on the inner protective sleeve 7 matches with the guide key 101 on the guide 1; the optical cable seal 9 and the protective tail sleeve 10 are then pushed forward, the protective tail sleeve 10 is pressed into the inner protective sleeve 7, and the first abutting step 1006 of the protective tail sleeve 10 and the annular clamping part 702 on the inner protective sleeve 7 are fixed by clamping, and note that the boss snap-in slot 703 on the inner protective sleeve 7 matches with the boss 1003 on the protective tail sleeve 10 to prevent rotation; the outer protective sleeve 12 is then pushed forward, and the annular boss 1205 on the outer protective sleeve 12 are pressed on the second abutting step 704 on the inner protective sleeve 7; the anti-bending tail sleeve 13 is pushed forward, and the anti-bending-tail-sleeve annular clamping slot 1304 in a front end of the anti-bending tail sleeve 13 matches with the annular clamping table 701 on the inner protective sleeve 7 to form clamping and fixing; the annular insertion end 1301 extends into a rear end of the outer protective sleeve 12; the connector protective cap 16 is installed; one end of the connector connecting piece 19 is sleeved into the first-connector annular slot 1303 on the anti-bending tail sleeve 13, the other end is sleeved into the second-connector annular slot 1601 of the connector protective cap 16, and the connector protective cap 16 is equipped with the first protective cap sealing ring 17 and the second protective cap sealing ring 18, so as to connect the connector protective cap 16 with the outer protective sleeve 12.

In use, only required is to remove the coupler protective cap 28, the connector protective cap 16, and the connector dust cap 15, and then install the coupler that has been fixed on the device on the prefabricated connector, and quick connection can thus be realized; attention should be paid during connection, the connector clamping part 1201 on the outer protective sleeve 12 should avoid a position of the coupler metal snap 22, the outer protective sleeve 12 can be rotated, after the outer protective sleeve 12 contacts the fourth protective cap sealing ring 26, so as to screw the connector clamping part 1201 into the coupler metal snap 22.

Finally, it should be noted that the above embodiments are only used to illustrate the technical solution of the present disclosure, but not to limit it; although the present disclosure has been described in detail with reference to the foregoing embodiments, those of ordinary skill in the art should understand that the technical solution described in the foregoing embodiments can still be modified, or some or all of the technical features can be equivalently replaced; however, these modifications or substitutions do not make the essence of the corresponding technical solution deviate from the scope of the technical solution of the embodiments of the present disclosure.

## Claims

1. A prefabricated connector, suitable for connecting with a coupler, comprising:
a connector housing assembly, wherein a first end of the connector housing assembly is formed with a ferrule assembly mounting cavity, and a second end of the connector housing assembly is formed with an optical cable lead-in cavity communicating with the ferrule assembly mounting cavity; and
a ferrule assembly, arranged inside the ferrule assembly mounting cavity and suitable for inserting and connecting of an optical fiber of an optical cable (14) introduced from the optical cable lead-in cavity;
wherein
a connector clamping part (1201) is arranged on an outer wall of the first end of the connector housing assembly, and the connector clamping part (1201) is suitable for being rotated into a coupler metal snap (22) arranged on the coupler when the prefabricated connector and the coupler are inserted in place; or
a connector metal snap is arranged on the first end of the connector housing assembly, and the connector metal snap is suitable for a coupler clamping part on the coupler to be rotated into the connector metal snap when the prefabricated connector and the coupler are inserted in place.

2. The prefabricated connector according to claim 1, further comprising a connector protective cap (16) connected with the first end of the connector housing assembly;
wherein a first snap (1602) is arranged on the connector protective cap (16), and is suitable for the connector clamping part (1201) to be rotated into the first snap (1602) when the connector housing assembly and the connector protective cap (16) are inserted in place;
or
a first clamping part is arranged on the connector protective cap (16), and is suitable for being rotated into the connector metal snap when the connector housing assembly and the connector protective cap (16) are inserted in place.

3. The prefabricated connector according to claim 2, wherein a first protective cap sealing ring (17) is sleeved on the connector protective cap (16), and when the connector clamping part (1201) is screwed into and connected with the first snap (1602), the first end of the connector housing assembly cooperates with the connector protective cap (16) to compress the first protective cap sealing ring (17).

4. The prefabricated connector according to claim 3, wherein a second protective cap sealing ring (18) is arranged between an outer wall of the connector protective cap (16) and an inner wall of the first end of the connector housing assembly.

5. The prefabricated connector according to any one of claims 2 to 4, wherein the connector protective cap (16) comprises a protective cap body and a round edge arranged around an outer wall of the protective cap body, and the first snap (1602) is arranged on the round edge.

6. The prefabricated connector according to any one of claims 1 to 4, wherein the connector clamping part (1201) is a first clamping boss arranged, along a circumferential direction, on the outer wall of the first end of the connector housing assembly, and a first ramp (1203) is formed on a first end of the first clamping boss to form a screw-in end screwed into the coupler metal snap (22) or a first snap (1602).

7. The prefabricated connector according to claim 6, wherein a first limiting protrusion (1202) is formed at a second end of the first clamping boss, and the first limiting protrusion (1202) is used for abutting against the coupler metal snap (22) or a first snap (1602) when the first clamping boss is screwed in place.

8. The prefabricated connector according to any one of claims 1 to 4, wherein the connector housing assembly comprises:
a connector inner housing assembly, in which the ferrule assembly mounting cavity and the optical cable lead-in cavity are formed; and
a connector outer housing assembly, arranged outside the connector inner housing assembly, and the connector clamping part (1201) or the connector metal snap is arranged on a first end of the connector outer housing assembly.

9. A coupler, suitable for connecting with the prefabricated connector according to any one of claims 1 to 8, comprising:
a coupler body, in which a sleeve mounting cavity (2008) is arranged; and
a sleeve (23), installed in the sleeve mounting cavity (2008), and suitable for inserting of a ferrule (3) of the ferrule assembly when the coupler is connected with the prefabricated connector;
wherein
a coupler metal snap (22) is arranged on the coupler body, and the coupler metal snap (22) is suitable for the connector clamping part (1201) on the prefabricated connector to be screwed into the coupler metal snap (22) when the prefabricated connector and the coupler are inserted in place;
or
a coupler clamping part is arranged on an outer wall of the coupler body, and is suitable for being screwed into the connector metal snap on the prefabricated connector when the prefabricated connector and the coupler are inserted in place.

10. The coupler according to claim 9, further comprising a coupler protective cap (28) connected with the coupler body;
wherein a second clamping part (2801) is arranged on the coupler protective cap (28), and is suitable for being screwed into the coupler metal snap (22) when the coupler body and the coupler protective cap (28) are inserted in place;
or
a second snap is arranged on the coupler protective cap (28), and is suitable for the coupler clamping part to be screwed into the second snap when the coupler body and the coupler protective cap (28) are inserted in place.

11. The coupler according to claim 10, wherein a third protective cap sealing ring (27) is sleeved on the coupler body, and when the connector clamping part (1201) or the second clamping part (2801) is screwed into and connected with the coupler metal snap (22), the first end of the connector housing assembly or an end of the coupler protective cap (28) cooperates with the coupler body to compress the third protective cap sealing ring (27).

12. The coupler according to claim 11, wherein a fourth protective cap sealing ring (26) is arranged between an inner wall of the coupler protective cap (28) and the outer wall of the coupler body.

13. The coupler according to any one of claims 10 to 12, wherein the coupler metal snap (22) comprises: a first plate (2201) and a second plate (2202) which are oppositely arranged, and a third plate (2203) which connects the first plate (2201) and the second plate (2202) to form a snap slot; wherein the first plate (2201) is connected to the coupler body, an end face of an end of the second plate (2202) which is not connected with the first plate (2201) is formed into a curved surface, which is suitable for cooperating with a curved outer wall of the connector housing assembly or a curved outer wall of the coupler protective cap (28).

14. The coupler according to claim 13, wherein the coupler body comprises:
a coupler outer end (20), comprising a coupler outer body with an outer-end cavity and the sleeve mounting cavity (2008) arranged at a first end of the coupler outer body, wherein the coupler outer body is suitable for connecting with the prefabricated connector or the coupler protective cap (28), and one end of the sleeve mounting cavity (2008) extends into the outer-end cavity and the other end extends outside the outer-end cavity;
a coupler inner end (21), having an inner-end cavity arranged thereon, wherein the inner-end cavity is suitable for the sleeve mounting cavity (2008) to be inserted into the inner-end cavity when a first end of the coupler inner end (21) is connected with a first end of the coupler outer end (20), and a second end of the coupler inner end (21) is an external threaded end; and
a locking nut (24), screwed on the second end of the coupler inner end (21);
a mounting slot (2104) is arranged between connecting surfaces of the coupler outer end (20) or the coupler inner end (21), and the first plate (2201) is arranged inside the mounting slot (2104) and is fixed by connecting of the coupler inner end (21) and the coupler outer end (20).

15. The coupler according to claim 14, wherein an outer flange (2001) is arranged on the first end of the coupler outer body, and the sleeve mounting cavity (2008) is fixedly arranged on the outer flange (2001);
an inner flange (2101) is arranged on the first end of the coupler inner end (21), and the coupler inner end (21) and the coupler outer end (20) are integrally connected through connecting of the outer flange (2001) and the inner flange (2101); and
the mounting slot (2104) is arranged on a connecting surface of the inner flange (2101), an annular skirt (2003) is arranged on a side, facing away from the coupler inner end (21), of the outer flange (2001), and an avoiding notch (2004) is arranged at a position of the annular skirt (2003) corresponding to the coupler metal snap (22).

16. The coupler according to any one of claims 10 to 12, wherein the second clamping part (2801) is a second clamping boss arranged, along a circumferential direction, on an outer wall of the coupler protective cap (28), and a second ramp (2802) is formed on a first end of the second clamping boss to form a screw-in end which is screwed into the coupler metal snap (22) or a second snap.

17. The coupler according to claim 16, wherein a second limiting protrusion (2803) is formed at a second end of the second clamping boss, and the second limit protrusion (2803) is used for abutting against the coupler metal snap (22) or a second snap after the second clamping boss is screwed in place.

18. A prefabricated connector assembly, comprising the prefabricated connector according to any one of claims 1 to 8 and the coupler according to any one of claims 9 to 17.
